Europäisches Patentamt

European Patent Office

Office européen des brevets

(19)

(11) EP 1 553 710 A1

(12) EUROPEAN PATENT APPLICATION

(43) Date of publication:
13.07.2005 Bulletin 2005/28

(51) Int Cl.⁷: H04B 10/08, H04B 10/17

(21) Application number: 04290045.6

(22) Date of filing: 08.01.2004

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicant: ALCATEL
75008 Paris (FR)

(72) Inventors:
• Grand, Eric
30000 Nimes (FR)

• Courtois, Olivier
92160 Antony (FR)
• Soigne, Jean-Philippe
92160 Antony (FR)

(74) Representative: Rausch, Gabriele, Dr. et al
Alcatel
Intellectual Property Department, Stuttgart
70430 Stuttgart (DE)

(54) **Method for per-channel power control in a DWDM network by means of an algorithm for adjusting the power of a dummy signal and the input power of an optical amplifier via channel-average Q-factor measurement**

(57)     A description is given of a method for per-channel power control in a DWDM transmission network comprising at least one optical amplifier that can be gain-controlled, comprising the steps of

    a) injection of a dummy signal into the optical transmission network in addition to the communications signals, with the dummy signal being controllable with regard to its power,
    b) determination of a channel-average Q-factor,
    c) increasing the per-channel gain by means of increasing the amplifier input power or lowering the dummy signal power,
    d) redetermination of the channel-average Q-factor,
    e) comparing the two channel-average Q-factors and computing their quotient, whereupon

-      in case of a quotient higher than 1 steps c) to e) need to be repeated, with the procedure being terminated after the maximum per-channel gain has been achieved, and
-      in case of a quotient lower than 1 the procedure is being resumed with step f),

f) lowering the per-channel gain by means of increasing the dummy signal power or lowering the amplifier input power,
g) redetermination of the channel-average Q-factor,
h) comparing the two channel-average Q-factors and computing their quotient, whereupon

-      in case of a quotient higher than 1 steps f) to h) need to be repeated, with the procedure being terminated after the minimum per-channel gain has been achieved, and
-      in case of a quotient lower than 1 the procedure is being terminated.

Fig. 1

EP 1 553 710 A1

## Description

Technical field:

The invention relates to a method for per-channel power control in a DWDM transmission network comprising at least one optical amplifier, with the transmission network injected with a dummy signal in addition to the communications signals, with the dummy signal being controllable with regard to its power, and with the dummy signal power and the optical amplifier's input power being adjusted by means of channel-average Q-factor measurement.

State of the art:

The invention relates to a method according to the specifying features of Claim 1.

Wavelength Division Multiplexing (WDM) has been introduced as a means of increasing the capacity of optical-fibre data transmission. In a WDM transmission network, each individual fibre carries a number of optical signals that have different wavelengths, with each individual wavelength constituting a channel. WDM transmission networks with 20 and more channels, i.e. modulated optical signals with different wavelengths, were known as Dense Wavelength Division Multiplexing (DWDM) transmission networks. When these optical signals are transmitted over long distances, periodic regeneration of the optical signals is necessary. Currently, this regeneration is effected either by demultiplexing the different wavelengths and then converting the optical signals to corresponding electrical signals which are regenerated and then reconverted to optical signals, or by using optical amplifiers (OAs), e.g. Erbium Doped Fibre Amplifiers (EDFA). Optical amplifiers have the advantage of both being relatively cost-efficient and having the ability to amplify all used wavelengths without the need of demultiplexing and opto-electronic regeneration. An EDFA has a core fibre that is doped with erbium ions. By specific pump lasers, erbium electrons are elevated to a higher energy state. When the signal photons arrive, the electrons are put back again to their original energy state, thereby generating photons themselves. Unlike digital line amplifiers, which can only regenerate a single optical signal, EDFAs are able to amplify signals of any bandwidth. By regulating the power of the pump lasers, the energy supply to the EDFA i.e. the input power of the EDFA, which is different from the power of the incoming signal, can be modified, by which the gain of the EDFA can be regulated. However, if EDFAs are used for regeneration of the optical transmission signal, a problem arises if one or more channels of the optical transmission signal fail or are added to or dropped from the optical transmission signal, or if, for example, at the beginning of life of the transmission network not all channels are occupied, as EDFAs are sensitive to variations of the transmission signal power. During the life of the system, the number of channels may change from the beginning of life of the system to the state where all channels are occupied. In these cases, cross-saturation in EDFAs will induce power transients in the surviving channels. The surviving channels will suffer error bursts if, for example, their powers exceed thresholds for optical nonlinearities or become too low to preserve adequate eye opening. Due to this, in DWDM systems, per-channel power control is one of the major issues, especially during the loading of the system. With the increase in the transmission distances (ultra long haul systems, very long haul systems) and in WDM networks complexity (ring topologies, optical routing capabilities and optical restoration / protection), it is a requirement for all WDM networks to enable adequate per-channel power control.

Two solutions are well known, based on the control of the gain of line amplifiers:

- Tune the amplifier total output power i.e. the power of the outgoing signal plus the noise power versus the signal power incoming to the amplifier. In most long haul DWDM systems, the amplifier gain tilt associated with other phenomena (mainly Raman depletion and amplifier NF tilt) leads to a propagation of a non-flat peak power distribution in order to equalize the received bit error rate (BER) of the various channels. In this case, an amplifier tuning based on the detection of the total input power does not allow to maintain constant per-channel power.

- insert a dummy signal at the amplifier input and remove the dummy signal at the amplifier output. This dummy signal allows to maintain a constant signal input power to the amplifier regardless of the channel count, resulting in keeping constant the global amplifier gain. As most wide-band (DWDM) amplifying devices (like EDFA) have an inhomogeneous gain, the insertion of a mono-wavelength dummy signal does not allow to control the gain of channels whose wavelengths differ strongly from the dummy signal's wavelength. Moreover, this solution requires to add to each amplifier a dummy signal as well as an electronic device to control the gain regulation loop. Also, the costs of this solution are very high. Due to these two reasons, this solution is not a practical, cost-efficient solution for DWDM systems.

The problem with both solutions is that only the amplifier total gain on its full bandwidth is maintained constant and not the per channel power of the installed signal channels.

Technical purpose of the invention:

The technical purpose of the invention is to develop a method for facilitating cost-efficient and reliable per-channel power control in an optical transmission network, particularly a DWDM transmission network, comprising at least one optical line amplifier (OA).

## Disclosure of the invention and its advantages:

The said method according to the specifying features of Claim 1 is characterized by the steps of

a) injection of a dummy signal into the optical transmission network in addition to the communications signals, with the dummy signal being controllable with regard to its power, and with this the power of the incoming signal at the first amplifier,
b) determination of a channel-average Q-factor $Q_{average}$, with $Q_{average}=( Q_1+Q_2,+...+Q_n)/n$ and with the index denoting the channel number,
c) increasing the per-channel gain by means of increasing the amplifier input power i.e. increasing the power of the pump laser or lowering the dummy signal power,
d) redetermination of the channel-average Q-factor,
e) comparing the two channel-average Q-factors and computing their quotient, whereupon

- in case of a quotient higher than 1 steps c) to e) need to be repeated, unless the maximum per-channel gain has been achieved by means of maximum amplifier input power and minimum dummy signal power, with the procedure being terminated after the maximum per-channel gain has been achieved, and
- in case of a quotient lower than 1 the procedure is being resumed with step f),

f) lowering the gain by means of increasing the dummy signal power or lowering the amplifier input power i.e. lowering the power of the pump laser,
g) redetermination of the channel-average Q-factor,
h) comparing the two channel-average Q-factors and computing their quotient, whereupon

- in case of a quotient higher than 1 steps f) to h) need to be repeated, unless the minimum per-channel gain has been achieved by means of maximum amplifier input power and minimum dummy signal power, with the procedure being terminated after the minimum per-channel gain has been achieved, and
- in case of a quotient lower than 1 the procedure is being terminated.

Due to the particular operation mode of the EDFA the gain of this amplifier is regulated via the input power of the EDFAs i.e. the power supplied by the pump laser, wherein input power means exclusively the power supplied by the pump lasers, that is different from the power of the signal also coming in into the EDFA and that will be reinforced by the input power supplied by the pump laser.
The Q-factor is a parameter that directly reflects the quality of a digital optical communications signal. The higher the Q-factor, the better the quality of the optical signal. Q-factor measurement is related to the analogue signal and in this respect differs from bit error rate (BER) tests. As the Q-factor is related to the analogue signal, it gives a measure of the propagation impairments caused by optical noise, non-linear effects, polarization effects and chromatic dispersion. The mathematical definition of the Q-factor is the signal-to-noise ratio of the analogue signal. The Q-factor can also be defined by the difference of the mean values of the two digital signal levels '1' and '0' divided by the sum of the noise rms values (standard deviations) at the two signal levels. This can be expressed by the equation

$$Q = \frac{\text{mean"1"-mean"0"}}{\text{standard deviation"1"+standard deviation"0"}}$$

The Q-factor can be measured separately for each transmission channel assigned to a single transmission signal. By adding the values of the Q-factors measured for each channel and dividing the sum by the number of channels, the channel-average Q-factor $Q_{average}$ can be computed.
Up to now, Q-factor measurement applications are limited to manufacturing, installation optimization, maintenance and troubleshooting, and monitoring of an optical transmission network. The said method allows a novel application of Q-factor measurement for per-channel power control in an optical transmission network.
The algorithm used in said method and based on the Q-factor measurement allows automatic power control (whether amplifier tuning or dummy signal tuning). Usually this type of algorithm must be used in conjunction with a pre-emphasis setting algorithm. The basic idea is that power control can either be done by controlling the dummy signal power or by controlling amplifier tuning. Compared to the state of the art, the said method allows a more cost-efficient per-channel power control, since the proposed solution needs dummy signals only in the terminal equipment and in each Optical Add Drop Multiplexer (OADM) site. Per-channel power control by means of the Q-factor has the advantage that a Q-factor meter operates also in the in-service mode of the optical network when the appropriate tap points are provided. This is made possible as the Q-factor meter is independent of bit rate and data format.
An advantageous embodiment of said method is characterized in that the DWDM transmission network is injected with at least a second dummy signal that has a different wavelength than the first dummy signal, with the procedural steps c) to h) being separately executed for each dummy signal frequency by means of respectively increasing or lowering the gain by respectively lowering or increasing the power of the respective dummy signal. By injecting a second dummy signal that has a different wavelength than the first dummy signal, also the gain of channels whose wavelengths differ strongly from the first dummy signal's wavelength can be controlled.

According to a particularly advantageous embodiment of said method, the channel-average Q-factor can be measured by means of a bit error rate (BER) determined per channel, so that this method comprises the following steps:

a) reading the BER of each channel (1, 2, 3, ..., n) in the remote terminal equipment,

b) determination of the Q-factor for each channel ($Q_1$, $Q_2$, ..., $Q_n$) by means of the BER,

c) computing the channel-average Q-factor $Q_{average}$ i (dB), with $Q_{average}i=( Q_1+Q_2,+...+Q_n)/n$ and i denoting the iteration cycle with '1' as the starting value,

d) increasing the gain by increasing the amplifier input power or decreasing the power of the dummy signal,

e) re-reading the BER of each channel,

f) redetermination of the Q-factor for each channel ($Q_1$, $Q_2$, ..., $Q_n$) by means of the BER,

g) recomputing the channel-average Q-factor $Q_{average\ i+1}$

h) comparing Of $Q_{average\ i+1}$ and $Q_{average\ i}$, whereupon

if $Q_{average\ i +1}\geq Q_{average\ i}$ (dB) then go to step i), and

if $Q_{average\ i+1}\leq Q_{average\ i}$ (dB) then go to step k),

i) increasing the gain by increasing the amplifier input power or decreasing the power of the dummy signal,

j) if amplifier input power is at the maximum i.e. the power of the pump laser is at the maximum or the dummy signal power is at the minimum, the procedure is being terminated, if not, re-enter the procedure at step e) with i=i+1,

k) decreasing the gain by decreasing the amplifier input power or by increasing the power of the dummy signal,

l) setting i=i+1,

m) re-reading the BER of each channel,

n) redetermination of the Q-factor for each channel ($Q_1$, $Q_2$, ..., $Q_n$) by using the BER,

o) recomputing the channel-average Q-factor $Q_{average\ i+1}$

p) comparing Of $Q_{average\ i+1}$ and $Q_{average\ i,}$ whereupon

-    if $Q_{average\ i+1}\geq Q_{average\ i}$ (dB) then go to step k), and

-    if $Q_{average\ i+1}\geq Q_{average\ i}$ (dB) the procedure is being terminated.

The basic idea is tune the amplifier or tune the dummy signal power depending on the BER read in the remote terminal equipment. Assuming that signal impairments follow a stochastic distribution, the Q-factor can be related to a BER. The BER can easily be read on the Forward Error Correction (FEC). An advantage of this embodiment of the invention is that, as this protection algorithm is based on BER measurement, it is not sensitive to the shape of the peak. As it will not be detected as a fault (no loss of signal), a change in the previous span loss will not bring any tuning of the amplifier.

Another advantageous embodiment of said method is characterized in that the DWDM transmission network is injected with at least a second dummy signal that has a different wavelength than the first dummy signal, with the method's steps e) to p) being separately executed for each dummy signal frequency by means of respectively increasing or lowering the gain by respectively lowering or increasing the power of the respective dummy signal.

Brief description of the drawing, with:

Figure 1    showing a DWDM transmission network, for which, by applying the said method for per-channel power control, the dummy signal power and the amplifier input power of the optical amplifiers accommodated along the transmission network are adjusted in order to achieve a maximum quality of the communications signal, and

Figure 2    showing a conventionally structured transmission network with a schematic illustration of the channel-specific pre-emphasis

requirement on the sender side and the channel-specific gain tilt on the receiver side.

Paths for performing the invention:

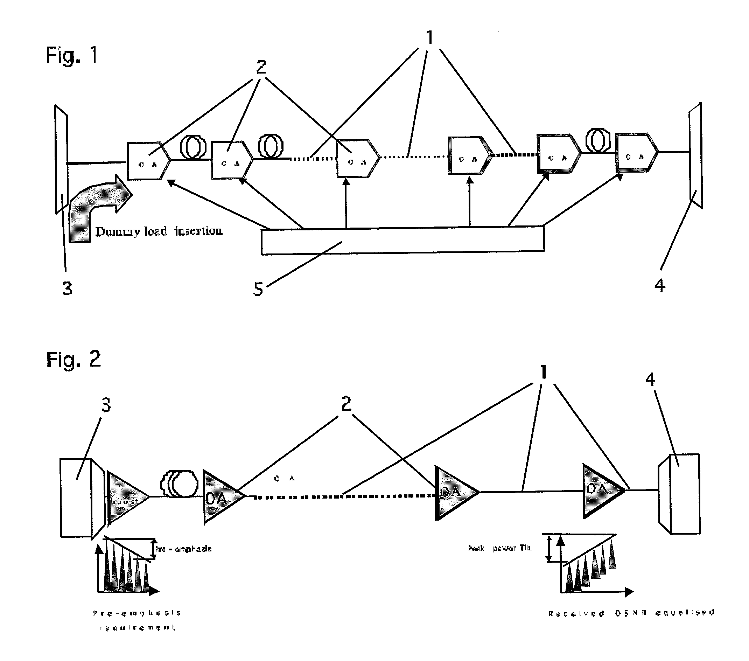

A DWDM transmission network 1 as shown in Figure 1 for optical communications signals accommodates several optical amplifiers (OAs) 2, arranged in between sender 3 and receiver 4. To achieve per-channel power control, on the sender side a dummy signal is injected into the transmission network 1 in addition to the communication signals, with the dummy signal being controllable with regard to its power. This measure particularly ensures a constant incoming signal power in the OAs 2, which partially may have unoccupied channels, so that, when EDFAs are used, cross-saturation that induces power transients in the surviving channels can be avoided. On the receiver side, for each channel in the optical transmission network 1 the BER can be determined in the FEC. At the beginning of the per-channel power control, the Q-factor of each channel is determined over the BER of the respective channel. After that, the average Q factor $Q_{average}$ of all channels is computed by averaging the single Q-factors. Then, the gain along the transmission network 1 is increased over the amplifier power tuning device 5, and the BER for each channel is redetermined, from which the Q-factor for each channel is determined, from which again the channel-average Q-factor $Q_{average}$ is computed. If the second channel-average Q-factor $Q_{average}$ is higher than the first one, which means that by means of increasing the gain by increasing the amplifier input power or lowering the dummy signal power a better quality of the signals transmitted has been achieved, the procedure needs to be repeated until the amplifier input power i.e. the power of the pump lasers of the OAs 2 in the transmission network 1 cannot be increased anymore and/or the power of the dummy signal cannot be lowered anymore, or until the latest channel-average Q-factor $Q_{average}$ is smaller than the previous one. In the first case, the procedure is being terminated. In the second case, the power of the dummy signal is increased or the amplifier input power is lowered. After that, the channel-average Q-factor $Q_{average}$ is redetermined and compared again with the previous one. If by increasing the power of the dummy signal or lowering the amplifier input power the quality could be improved, the procedure is being repeated. If the quality has gotten worse, the procedure is being terminated, as the amplifier input power and the dummy signal power have been optimized and adjusted to one another.

Figure 2 shows a conventionally structured DWDM transmission network 1 with several OAs 2 in between sender 3 and receiver 4. The two diagrams below the transmission network 1 represent on the sender side (left) the channel-specific preemphasis requirement and on the receiver side (right) the channel-specific gain tilt accompanied by an increasing optical noise depending on the channel's wavelength. Especially the Stimulated Raman Scattering (SRS) produces stronger losses in the channels with a higher frequency and a shorter wavelength that in channels with a lower frequency and a longer wavelength. SRS is caused by interaction of molecular vibrations with photons to generate a new higher wavelength. SRM also causes a gain tilt over the overall DWDM spectrum. In channels with a longer wavelength, which in the two diagrams are placed on the right side, the optical noise increases, whereas the channels with a shorter wavelength, which in the two diagrams are placed on the left side, experience strong losses, yet without a significant rise of the optical noise in the short-wave range. These phenomena are supported by the use of EDFAs in optical transmission networks, since an EDFA also has some weakpoints, besides its advantages. For example, an EDFA does not amplify all wavelengths equally (this phenomenon is called gain tilt). Besides, interference noises are being amplified too. This must be compensated by appropriate measures, e.g. error correction or use of individual digital amplifiers.

Commercial applicability:

The invention is commercially applicable particularly in the field of production and operation of networks for optical data transmission.

## Claims

1. Method for per-channel power control in a DWDM transmission network comprising at least one optical amplifier that can be gain-controlled, **characterized by** the steps of

   a) injection of a dummy signal into the optical transmission network in addition to the communications signals, with the dummy signal being controllable with regard to its input power;
   b) determination of a channel-average Q-factor,
   c) increasing the per-channel gain by means of increasing the amplifier input power or lowering the dummy signal power,
   d) redetermination of the channel-average Q-factor,
   e) comparing the two channel-average Q-factors and computing their quotient, whereupon

   - in case of a quotient higher than 1 steps c) to e) need to be repeated, with the procedure being terminated after the maximum per-channel gain has been achieved, and
   - in case of a quotient lower than 1 the procedure is being resumed with step f),

   f) lowering the per-channel gain by means of increasing the dummy signal power or lowering the amplifier input power,
   g) redetermination of the channel-average Q-factor,
   h) comparing the two channel-average Q-factors and computing their quotient, whereupon

   - in case of a quotient higher than 1 steps f) to h) need to be repeated, with the procedure being terminated after the minimum per-channel gain has been achieved, and
   - in case of a quotient lower than 1 the procedure is being terminated.

2. Method according to Claim 1, **characterized in that** the DWDM transmission network is injected with at least a second dummy signal that has a different wavelength than the first dummy signal, with the method's steps c) to h) being separately executed for each dummy signal frequency by means of respectively increasing or lowering the gain by respectively lowering or increasing the power of the

respective dummy signal.

respective dummy signal.

3. Method according to Claim 1, with the determination of the channel-average Q-factor done by means of the bit error rate determined per channel, with said method comprising the following steps:

a) reading the BER of each channel (1, 2, 3, ..., n) in the remote terminal equipment,
b) determination of the Q-factor for each channel ($Q_1$, $Q_2$, ..., $Q_n$) by means of the BER,
c) computing the channel-average Q-factor $Q_{average}$ i (dB)
d) increasing the power by increasing the amplifier input power or decreasing the power of the dummy signal,
e) re-reading the BER of each channel,
f) redetermination of the Q-factor for each channel ($Q_1$, $Q_2$, ..., $Q_n$) by using the BER,
g) recomputing of the channel-average Q-factor $Q_{average\ i+1}$
h) comparing of $Q_{average\ i+1}$ and $Q_{average\ i}$, whereupon
if $Q_{average\ i+1} \geq Q_{average\ i}$ (dB) then go to step i) and
if $Q_{average\ i+1} \leq Q_{average\ i}$ (dB) then go to step k),
i) increasing of the power by increasing the amplifier input power or decreasing the power of the dummy signal,
j) if amplifier input power is at the maximum or the dummy channel power is at the minimum, the procedure is being terminated, if not, re-enter the procedure at step e) with i=i+1,
k) decreasing the power by decreasing the amplifier input power or by increasing the power of the dummy signal,
l) setting i=i+1,
m) re-reading the BER of each channel,
n) redetermination of the Q-factor for each channel ($Q_1$, $Q_2$, ..., $Q_n$) by means of the BER,
o) recomputing of the channel-average Q-factor $Q_{average\ i+1}$
p) comparing of $Q_{average\ i+1}$ and $Q_{average\ i}$, whereupon

- if $Q_{average\ i+1} \geq Q_{average\ i}$ (dB) then go to step k) and
- if $Q_{average\ i+1} \leq Q_{average\ i}$ (dB) the procedure is being terminated.

4. Method according to Claim 3, **characterized in that** the DWDM transmission network is injected with at least a second dummy signal that has a different wavelength than the first dummy signal, with the method's steps e) to p) being separately executed for each dummy signal frequency by means of respectively increasing or lowering the gain by respectively lowering or increasing the power of the

Fig. 1

Dummy load insertion

Fig. 2

Pre - emphasis

Pre-emphasis
requirement

Peak power Tilt

Received OSNR equalised

EP 1 553 710 A1

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 874 477 A (OKI ELECTRIC IND CO LTD) 28 October 1998 (1998-10-28) * page 4, column 6, line 53 - page 5, column 7, line 42 * * page 6, column 9, line 54 - column 10, line 14 * * figure 15 * ----- | 1-4 | H04B10/08 H04B10/17 |
| A | US 6 426 817 B1 (TOMITA TAKAHARU) 30 July 2002 (2002-07-30) * column 2, line 5 - line 20 * * figure 6 * ----- | 1-4 | |
| A | US 2002/080471 A1 (AKIYAMA KOUITI) 27 June 2002 (2002-06-27) * page 1, paragraph 11 - paragraph 12 * * figure 2 * ----- | 1-4 | |

TECHNICAL FIELDS SEARCHED (Int.Cl.7)

H04B

The present search report has been drawn up for all claims

| Place of search | Date of completion of the search | Examiner |
|---|---|---|
| The Hague | 16 July 2004 | Carrasco Comes, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 04 29 0045

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2004

| Patent document cited in search report | | Publication date | Patent family member(s) | | Publication date |
|---|---|---|---|---|---|
| EP 0874477 | A | 28-10-1998 | JP<br>CN<br>EP<br>US | 11008590 A<br>1198051 A<br>0874477 A2<br>6229631 B1 | 12-01-1999<br>04-11-1998<br>28-10-1998<br>08-05-2001 |
| US 6426817 | B1 | 30-07-2002 | JP<br>FR | 11252047 A<br>2775856 A1 | 17-09-1999<br>10-09-1999 |
| US 2002080471 | A1 | 27-06-2002 | JP | 2002198599 A | 12-07-2002 |

EPO FORM P0459

For more details about this annex : see Official Journal of the European Patent Office, No. 12/82